# EUROPÄISCHE PATENTSCHRIFT

(11) **EP 2 914 092 B1**
(45) Veröffentlichungstag und Bekanntmachung des Hinweises auf die Patenterteilung: **07.06.2017**
(21) Anmeldenummer: 13783966.8
(22) Anmeldetag: 31.10.2013
(51) Int. Cl.: A01G 9/24

(54) **VERFAHREN ZUR BEWÄSSERUNG VON PFLANZEN SOWIE PFLANZKAMMER MIT BEWÄSSERUNGSSYSTEM**
METHOD FOR WATERING PLANTS, AND PLANTING CHAMBER COMPRISING WATERING SYSTEM
PROCÉDÉ POUR ARROSER LES PLANTES ET CHAMBRE DE CULTURE MUNIE D'UN SYSTÈME D'ARROSAGE

(30) Priorität: 05.11.2012 DE 102012220111
(43) Veröffentlichungstag der Anmeldung: 09.09.2015
(73) Patentinhaber: Neuhaus, Dietmar, 40591 Düsseldorf (DE)
(72) Erfinder: Neuhaus, Dietmar, 40591 Düsseldorf (DE)
(74) Vertreter: dompatent von Kreisler Selting Werner - Partnerschaft von Patent- und Rechtsanwälten mbB
(86) Internationale Anmeldenummer: PCT/EP2013/072846
(87) Internationale Veröffentlichungsnummer: WO 2014/068074

(56) Entgegenhaltungen:
- CN-U- 202 444 894
- DE-A1- 1 434 999
- DE-A1- 1 949 472
- DE-A1- 3 332 499
- DE-A1- 4 022 039
- DE-A1-102010 050 664

## Beschreibung

Die vorliegende Erfindung betrifft ein Verfahren zur Bewässerung von in einem Nährboden gepflanzten Pflanzen sowie eine Pflanzkammer mit einem Bewässerungssystem.

Nur weniger als 4% des Wassers auf der Erde ist Süßwasser und für die Landwirtschaft geeignet. Der überwiegende Teil des Wassers ist zu salzhaltig, um direkt für die Landwirtschaft nutzbar zu sein, d.h., dass mit diesem Wasser ein Nährboden für Pflanzen nicht bewässert werden kann, da es zu einer Versalzung des Nährbodens führen würde.

Es ist bekannt, salzwasserhaltiges Wasser so weit zu entsalzen, dass es für die Landwirtschaft direkt nutzbar ist. Derartige Verfahren sind jedoch kompliziert und mit einem energetisch hohen Aufwand verbunden. DE 33 32 499 A1 offenbart ein Gewächshaus mit einer Pflanzkammer mit einem Verdunster für Meerwasser und einen Kühler zur Kondensation des verdunsteten Wassers. DE 14 34 999 A1 offenbart ein Gewächshaus mit einer Steuerung zum Öffnen und Schließen von Fenstern. DE 10 2010 050664 A1 offenbart ein Verfahren gemäß dem Oberbegriff des Anspruchs 1. Auch eine falsche Bewässerung eines Nährbodens, wie beispielsweise eine Ackerfläche, kann zu einer Versalzung des Bodens führen, wenn beispielsweise eine übermäßige Bewässerung erfolgt. Durch Verdunstung von Wasser an der Oberfläche kommt es daher insbesondere an der Oberfläche zu einer Erhöhung der Salzkonzentration. Dies führt langfristig zur Unfruchtbarkeit des Bodens. Gegenmaßnahmen, wie beispielsweise Drainagesysteme, sind jedoch zumeist mit einem hohen finanziellen Aufwand verbunden.

Es ist daher die Aufgabe der vorliegenden Erfindung, ein Verfahren zur Bewässerung von in einem Nährboden gepflanzter Pflanzen bereitzustellen, bei dem eine Versalzung des Bodens vermieden bzw. gering gehalten wird, wobei vorzugsweise stark salzhaltiges Wasser verwendet werden kann. Es ist ferner die Aufgabe der vorliegenden Erfindung, eine Pflanzkammer mit einem Bewässerungssystem bereitzustellen, mit der das Verfahren durchgeführt werden kann.

Die vorliegende Erfindung ist definiert durch die Merkmale der Ansprüche 1 und 7.

Bei dem erfindungsgemäßen Verfahren zur Bewässerung von in einem Nährboden gepflanzten Pflanzen, wobei zumindest der Nährboden in einer Pflanzkammer angeordnet ist, sind folgende Schritte vorgesehen:
a) Erzeugen einer ersten Atmosphäre mit einer ersten relativen Luftfeuchtigkeit R1 in der Pflanzkammer und Beibehalten der ersten Atmosphäre für einen Zeitraum T1,
b) Reduzieren der relativen Luftfeuchtigkeit zu einer zweiten Atmosphäre mit einer zweiten relativen Luftfeuchtigkeit R2 und Aufrechterhalten der zweiten Atmosphäre für einen Zeitraum T2,
c) Wiederholen der Schritte a) und b), wobei die Wiederholung vorzugsweise mehrfach erfolgt,
d) erneutes Erzeugen der ersten Atmosphäre und Aufrechterhalten der ersten Atmosphäre für einen Zeitraum T3 zur Erzeugung einer großflächigen Benetzung des Nährbodens, wobei die erste relative Luftfeuchtigkeit R1 eine mit Wasser gesättigte oder quasi gesättigte erste Atmosphäre erzeugt.

Das erfindungsgemäße Verfahren sieht somit vor, dass das Wasser über seine Gasphase zu dem Nährboden transportiert wird und sich auf diesen niederschlägt.

Es hat sich herausgestellt, dass durch das Aussetzen des Nährbodens einer Atmosphäre mit einer relativen Luftfeuchtigkeit von 100% oder geringfügig darunter die Oberfläche des Nährbodens zunächst Wassermoleküle des Wasserdampfes adsorbieren. Bei dem anschließenden Aussetzen des Nährbodens einer zweiten Atmosphäre, mit einer relativen Luftfeuchtigkeit, die geringer ist als die Luftfeuchtigkeit der ersten Atmosphäre, wird ein Teil des adsorbierten Wassers desorbiert.

Bei der Desorption können jedoch Moleküle des Wassers auf der Oberfläche des Nährbodens zurückbleiben. Diese bewirken, dass die Oberfläche des Nährbodens für die Adsorption des Wassers aktiviert ist, d.h. dass die Wahrscheinlichkeit der Adsorption der Wassermoleküle erhöht ist. Durch Wiederholen der Verfahrensschritte a) und b) kann die Aktivierung der Oberfläche des Nährbodens gesteigert werden, so dass bei dem Verfahrensschritt c), bei dem erneut die erste Atmosphäre und somit eine gesättigte oder quasi gesättigte Atmosphäre erzeugt wird, eine großflächige Benetzung des Nährbodens hervorgerufen werden kann. Es kommt zu einer sogenannten Benetzungskatastrophe, d.h. einer massiven Adsorption von Wasser an der aktivierten Oberfläche des Nährbodens.

Für die Durchführung des Verfahrens kann die zweite relative Luftfeuchtigkeit R2 für die Erzeugung der zweiten Atmosphäre beispielsweise 70% betragen.

Da durch die Übertragung des Wassers über seine Gasphase das Salz nicht transportiert wird, wird somit der Nährboden nicht durch Salz geschädigt.

Die Theorie der Entstehung einer Benetzungskatastrophe ist in der deutschen Patentanmeldung DE 10 2010 026 591.8 "Verfahren zum Befeuchten von Oberflächen eines Festkörpers" der Anmelderin auf Seiten 9 und 10 in Bezug auf einzelne Festkörper beschrieben, worauf vollumfänglich Bezug genommen wird. Die Anmelderin hat herausgefunden, dass sich das Prinzip der Befeuchtung von Oberflächen eines Festkörpers auch großflächig für die Benetzung von Nährboden für Pflanzen übertragen lässt.

Das erfindungsgemäße Verfahren kann vorsehen, dass auch die gesamten Pflanzen in der Pflanzkammer angeordnet sind, so dass bei dem erfindungsgemäßen Verfahren nicht nur der Nährboden, sondern auch die Oberflächen der Pflanzen benetzt werden. Dies hat den Vorteil, dass das auf den Pflanzen niedergeschlagene Wasser von den Pflanzen auf den Nährboden tropfen kann und somit ebenfalls für die Versorgung der Pflanzen zur Verfügung steht.

In einem Ausführungsbeispiel der Erfindung ist vorgesehen, dass die erste Atmosphäre durch das Einbringen von flüssigem Wasser in die Pflanzkammer erzeugt wird, wobei die Oberfläche des Wassers mit der Atmosphäre in der Pflanzkammer in Kontakt steht. Wassermoleküle aus dem flüssigen Wasser gelangen in die Atmosphäre der Pflanzkammer und in der Pflanzkammer wird die erste Atmosphäre erzeugt, die mit Wasser gesättigt bzw. quasi gesättigt ist. Die erste Atmosphäre kann somit auf sehr einfache Art und Weise bereitgestellt werden. Insbesondere ist vorgesehen, dass das Wasser für eine direkte Pflanzenbewässerung ungeeignetes oder nur bedingt geeignetes Wasser ist. Das erfindungsgemäße Verfahren kann somit auch stark salzhaltiges Wasser, wie beispielsweise Grundwasser, Brackwasser oder Meerwasser, verwenden, ohne dass die Gefahr der Versalzung des Nährbodens entsteht.

Das erfindungsgemäße Verfahren sieht in vorteilhafter Weise vor, dass das Wasser mittels Kanäle durch die Pflanzkammer geleitet wird. Dies hat den Vorteil, dass ein Wasserfluss durch die Pflanzkammer erzeugt werden kann, wodurch verhindert wird, dass es aufgrund der Verdunstung des Wassers zu einer Aufkonzentration von Salz in dem Wasser kommen kann, oder dass Salzablagerungen entstehen. Ferner wird durch die Kanäle eine große Kontaktfläche zwischen dem Wasser und der Atmosphäre erzeugt, so dass relativ schnell die Erzeugung der ersten Atmosphäre bewirkt werden kann.

Vorzugsweise ist vorgesehen, dass T1 größer T2 und/oder T3 größer T1 ist.

Es hat sich herausgestellt, dass mit dem erfindungsgemäßen Verfahren die Oberfläche des Nährbodens besonders gut befeuchtet werden kann, wenn der Zeitraum, in dem der Nährboden der ersten Atmosphäre ausgesetzt ist, länger ist als der Zeitraum, in dem der Nährboden der zweiten Atmosphäre ausgesetzt ist. Insbesondere wenn die zweite Luftfeuchtigkeit R2 der zweiten Atmosphäre wesentlich geringer ist als die erste Luftfeuchtigkeit R1 der ersten Atmosphäre, erfolgt ein Desorptionsvorgang des Wassers an der Oberfläche des Nährbodens sehr schnell im Vergleich zu dem vorangegangenen Adsorptionsvorgang. Daher ist es von Vorteil, wenn der Zeitraum T2 geringer ist als der Zeitraum T1, so dass das Wasser teilweise von der Oberfläche des Nährbodens desorbiert wird und ausreichend Wassermoleküle zur Aktivierung der Oberfläche des Nährbodens verbleiben. Der Zeitraum T3 kann derart gewählt werden, dass bei einer ausreichenden Aktivierung der Oberfläche des Nährbodens eine Benetzungskatastrophe mit Wasser in Verfahrensschritt d) entsteht. Die Zeiträume T1, T2 und T3 können im Bereich von einigen Sekunden bis mehrerer Minuten liegen.

Bei einem bevorzugten Ausführungsbeispiel des erfindungsgemäßen Verfahrens ist vorgesehen, dass in Schritt b) die Reduzierung der relativen Luftfeuchtigkeit durch einen Luftaustausch mit der Umgebung außerhalb der Pflanzkammer erfolgt. Auf diese Weise lässt sich die Luftfeuchtigkeit in der Pflanzkammer zur Erzeugung der zweiten Atmosphäre auf sehr einfache Art und Weise herbeiführen.

Die Luftfeuchtigkeit R2 der zweiten Atmosphäre muss nicht notwendigerweise konstant sein. Es besteht die Möglichkeit, dass sich die Luftfeuchtigkeit während der Durchführung des Verfahrensschritts b) verändert, sofern gewährleistet ist, dass die zweite relative Luftfeuchtigkeit R2 geringer ist als die erste relative Luftfeuchtigkeit R1 und somit ein Desorptionsvorgang erfolgt. Auch kann die zweite relative Luftfeuchtigkeit R2 bei der wiederholten Durchführung des Verfahrens b) unterschiedlich sein.

Insbesondere ist vorgesehen, dass die zweite relative Luftfeuchtigkeit R2 der zweiten Atmosphäre mindestens 10% geringer ist als die erste relative Luftfeuchtigkeit R1 der ersten Atmosphäre.

Die Erfindung sieht ferner eine Pflanzkammer mit Bewässerungssystem zur Durchführung des erfindungsgemäßen Verfahrens vor. Die Pflanzkammer besteht aus Kammerwänden und einer Kammerdecke, die zumindest einen Nährboden für Pflanzen umschließt, einem Behältersystem mit Wasser, wobei in dem Behältersystem aufgenommenes Wasser mit der in der Pflanzkammer befindlichen Atmosphäre in Kontakt steht und einem regelbaren Belüftungssystem zur Veränderung der in der Pflanzkammer befindlichen Atmosphäre durch Luftaustausch. Mittels einer derartigen Pflanzkammer lässt sich das erfindungsgemäße Verfahren in besonders vorteilhafter Weise durchführen. Die Kammer verhindert, dass die in der Pflanzkammer erzeugte Atmosphäre entweichen kann, so dass der gewünschte Adsorption- oder Desorptionsvorgang erfolgen kann. Das regelbare Belüftungssystem sorgt dafür, dass nach der Durchführung des Verfahrensschritts a) die relative Luftfeuchtigkeit in der Pflanzkammer zur Durchführung des Verfahrensschritts b) reduziert werden kann. Das Vorsehen eines Belüftungssystems, das dies durch Luftaustausch ermöglicht, ist eine konstruktiv einfache und kostengünstige Lösung für die Reduzierung der relativen Luftfeuchtigkeit.

In einem Ausführungsbeispiel der Erfindung ist vorgesehen, dass der Nährboden den Boden der Pflanzkammer bildet.

Alternativ ist vorgesehen, dass der Nährboden in einem Trogsystem aufgenommen ist, und dass die Pflanzkammer einen separaten Boden aufweist. Durch das Aufnehmen des Nährbodens in einem Trogsystem hat den Vorteil, dass der Nährboden von geringer Tiefe ausgebildet werden kann, so dass die von dem Nährboden adsorbierte Feuchtigkeit nicht sehr tief eindringen muss, um den Pflanzen in vorteilhafter Weise zur Verfügung zu stehen.

Die Kammerwände der Pflanzkammer können zumindest teilweise lichtdurchlässig sein. Dadurch kann ausreichend Licht für das Pflanzenwachstum zur Verfügung gestellt werden, was insbesondere wichtig ist, wenn die Pflanzkammer nicht nur den Nährboden, sondern auch die Pflanzen umschließt. Selbstverständlich ist es auch möglich, dass die Pflanzkammer ein Beleuchtungssystem zur Beleuchtung von Pflanzen aufweist.

Das Behältersystem, das das Wasser aufnimmt, um in der Pflanzkammer die gewünschte erste Atmosphäre zu ermöglichen, kann durch die Pflanzkammer geführte Kanäle aufweisen, wobei die Kanäle jeweils einen Zu- und Abfluss aufweisen. Die Kanäle ermöglichen, dass das Wasser durch die Pflanzkammer fließen kann, wodurch eine Aufkonzentration von Salz in dem Wasser sowie Salzablagerungen verhindert werden.

In einem Ausführungsbeispiel der Erfindung ist vorgesehen, dass die Kanäle rinnenförmig ausgebildet sind und eine größere Breite als Tiefe besitzen. Dadurch kann eine große Oberfläche und somit eine große Kontaktfläche zwischen dem Wasser und der in der Pflanzkammer herrschenden Atmosphäre geschaffen werden. Dadurch gelangt eine große Anzahl von Wassermolekülen aus dem Wasser in die Atmosphäre.

Die Erfindung sieht in vorteilhafter Weise vor, dass mehrere Kanäle regalförmig übereinander angeordnet sind. Dadurch werden die Kanäle besonders platzsparend in der Pflanzkammer angeordnet. Gleichzeitig wird eine sehr große Wasseroberfläche erzeugt. Das Belüftungssystem kann in den Kammerwänden angeordnete Belüftungsöffnungen mit die Belüftungsöffnungen verschließenden Belüftungsklappen aufweisen. Auf diese Weise kann das Belüftungssystem einen Luftaustausch mit der Umgebung der Pflanzkammer auf besonders einfache Weise bereitstellen. Die Belüftungsklappen können beispielsweise eine zentrale Steuerung aufweisen, wodurch sich die Reduzierung der relativen Luftfeuchtigkeit im Verfahrensschritt b) in besonders vorteilhafter Weise automatisch steuern lässt. Dazu kann die Pflanzkammer ferner herkömmliche Messgeräte zur Bestimmung der relativen Luftfeuchtigkeit in der Pflanzkammer aufweisen.

Die erfindungsgemäße Pflanzkammer kann ferner Absorberflächen aufweisen, die in der Pflanzkammer angeordnet sind. Auf diese Weise kann erreicht werden, dass bei der Durchführung des erfindungsgemäßen Verfahrens sich Feuchtigkeit ebenfalls auf den Absorberflächen niederschlägt und von den Absorberflächen auf den Nährboden tropfen kann. Somit steht auch das auf den Absorberflächen niedergeschlagene Wasser für die Versorgung der Pflanzen zur Verfügung. Dabei kann es insbesondere vorgesehen sein, dass die Absorberflächen oberhalb der Pflanzen oder zu den Pflanzen hin gerichtet angeordnet sind, so dass das auf den Absorberflächen niedergeschlagene Wasser in besonders vorteilhafter Weise zu den Pflanzen gelangen kann.

Das in der erfindungsgemäßen Pflanzkammer verwendete Wasser kann Wasser sein, das für die direkte Pflanzenbewässerung ungeeignet oder nur bedingt geeignet ist.

Im Folgenden wird unter Bezugnahme auf die nachfolgenden Figuren die Erfindung näher erläutert.

Es zeigen:
- Figur 1: eine schematische Darstellung eines ersten Ausführungsbeispiels einer erfindungsgemäßen Pflanzkammer und
- Figur 2: eine schematische Darstellung eines zweiten Ausführungsbeispiels einer erfindungsgemäßen Pflanzkammer.

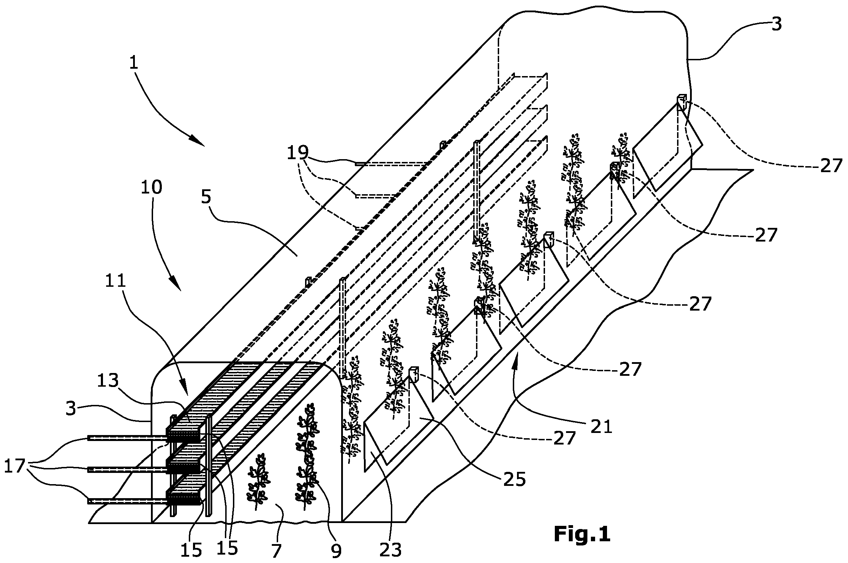

In Figur 1 ist eine erfindungsgemäße Pflanzkammer 1 schematisch in einer perspektivischen Darstellung gezeigt. Die Pflanzkammer besteht aus Kammerwänden 3 und einer Kammerdecke 5 und umschließt einen Nährboden 7, in dem Pflanzen 9 eingepflanzt sind. Der Nährboden 7 bildet in dem in Figur 1 dargestellten Ausführungsbeispiel den Boden der Pflanzkammer 1.

Die Pflanzkammer 1 weist ferner ein Bewässerungssystem 10 mit einem Behältersystem 11 auf, das Wasser 13 aufnimmt. Das Behältersystem 11 besteht aus mehreren regalförmig übereinander angeordneten Kanälen 15, die jeweils einen Zulauf 17 und einen Ablauf 19 aufweisen. Das Wasser 13 wird über den Zulauf 17 in die Kanäle 15 eingeleitet, fließt durch die Kanäle 15 und verlässt die Kanäle 15 durch die Abläufe 19. Die Kanäle 15 sind rinnenförmig ausgebildet und besitzen eine größere Breite als Tiefe, wodurch eine sehr große Oberfläche des Wassers 13 erzeugt wird.

Die Kanäle 15 sind nach oben hin offen, so dass das Wasser 13 mit der in der Pflanzkammer 1 befindlichen Atmosphäre in Kontakt steht. Dadurch gelangen Wassermoleküle aus dem Wasser 13 in die Atmosphäre und es kann eine erste Atmosphäre geschaffen werden, die eine relative Luftfeuchtigkeit R1 von 100% oder knapp darunter aufweist. Die erste Atmosphäre ist somit eine mit Wasser gesättigte oder quasi gesättigte Atmosphäre.

Die Pflanzkammer 1 weist ferner ein Belüftungssystem 21 auf, das aus in Kammerwänden 3 angeordneten Belüftungsöffnungen 23 besteht, die über Belüftungskappen 25 verschließbar sind. Die Belüftungsklappen 25 sind über eine nicht dargestellte zentrale Steuerung mittels Stellantrieben 27 steuerbar.

Über das Belüftungssystem 21 kann die in der Pflanzkammer 1 herrschende Atmosphäre in Luftaustausch mit der Umgebung gebracht werden, wodurch eine Reduzierung der relativen Luftfeuchtigkeit in der Pflanzkammer 1 erzeugt werden kann. Dies erfolgt, indem über die zentrale Steuerung die Belüftungsklappen 25 geöffnet werden. Durch Schließen der Belüftungsklappen 25 wird der Luftaustausch mit der Umgebung unterbunden, so dass die relative Luftfeuchtigkeit in der Pflanzkammer 1 durch das Wasser 13 erhöht wird, indem Wassermoleküle von dem Wasser 13 in die Atmosphäre gelangen.

Die Kammerwände 3 und die Kammerdecke 5 sind lichtdurchlässig ausgebildet, so dass die Pflanzen 9 mit für das Wachstum ausreichendem Licht versorgt werden. Alternativ oder zusätzlich kann die Pflanzkammer 1 auch eine Beleuchtungsvorrichtung aufweisen.

Die Pflanzkammer 1 kann ferner ein nicht dargestelltes Messsystem zur Bestimmung der relativen Luftfeuchtigkeit aufweisen.

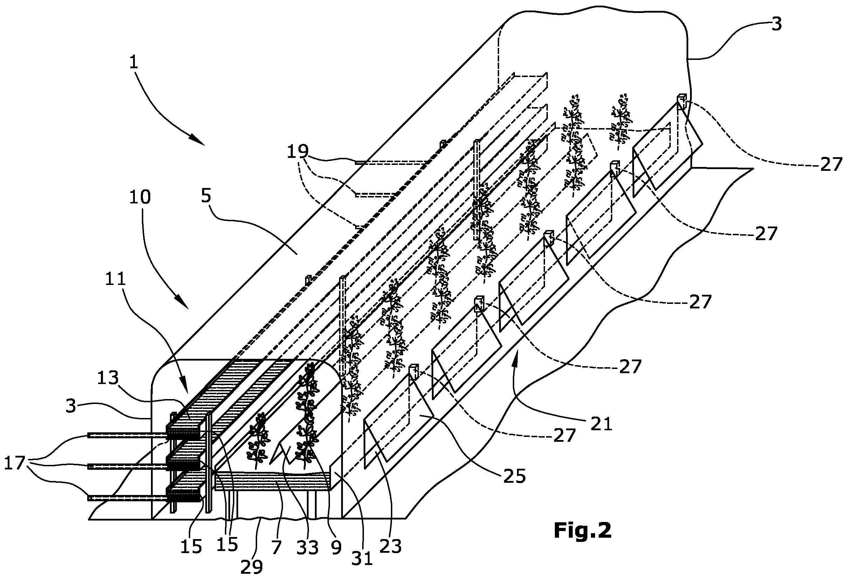

In Figur 2 ist ein zweites Ausführungsbeispiel der erfindungsgemäßen Pflanzkammer 1 gezeigt. Das zweite Ausführungsbeispiel ist im Wesentlichen identisch mit dem ersten Ausführungsbeispiel ausgebildet mit dem Unterschied, dass der Nährboden nicht den Boden der Pflanzkammer 1 bildet, sondern die Pflanzkammer 1 einen separaten Boden 29 aufweist. Der Nährboden 7 ist in dem zweiten Ausführungsbeispiel in einem Pflanztrog 31 aufgenommen, so dass der Nährboden 7 nur eine geringe Tiefe aufweist. Die Verwendung eines Trogsystems 31 hat den Vorteil, dass die von dem Nährboden 7 adsorbierte Feuchtigkeit nicht sehr tief in den Nährboden 7 eindringen muss, um den Pflanzen zur Verfügung zu stehen.

Mittels der erfindungsgemäßen Pflanzkammer 1 lässt sich das erfindungsgemäße Verfahren in besonders vorteilhafter Weise durchführen. In dem Verfahrensschritt a) sind die Belüftungsklappen 25 des Belüftungssystems 21 geschlossen, wodurch in der Pflanzkammer 1 eine erste Atmosphäre mit einer ersten relativen Luftfeuchtigkeit R1 von 100% erzeugt werden kann und über einen vorgegebenen Zeitraum T1 beibehalten wird. Die relative Luftfeuchtigkeit R1 entsteht, indem Wassermoleküle von dem durch die Kanäle 15 geführten Wasser 13 an die Atmosphäre abgegeben wird. Die Wassermoleküle werden von dem Nährboden 7 und den Pflanzen 9 adsorbiert. Anschließend wird in Verfahrensschritt b) die relative Luftfeuchtigkeit reduziert, indem die Belüftungsklappen 25 geöffnet werden, so dass ein Luftaustausch der in der Pflanzkammer 1 herrschenden ersten Atmosphäre mit der Umgebung durch die Belüftungsöffnungen 23 entstehen kann. In der Pflanzkammer 1 wird nun eine zweite Atmosphäre mit einer zweiten relativen Luftfeuchtigkeit R2, die wesentlich geringer ist als die erste relative Luftfeuchtigkeit R1 erzeugt. Die von dem Nährboden 7 und den Pflanzen 9 adsorbierten Wassermoleküle desorbieren nunmehr teilweise von dem Nährboden 7 und den Pflanzen 9. Nach einem vorgegebenen Zeitraum T2 werden die Belüftungsklappen 25 wiederum geschlossen, so dass der Verfahrensschritt a) wiederholt werden kann. Anschließend wird der Verfahrensschritt b) durch ein Öffnen der Belüftungsklappen 25 erneut wiederholt. Die Verfahrensschritte a) und b) können mehrfach wiederholt werden. Anschließend wird erneut durch ein Schließen der Belüftungsklappen 25 die erste Atmosphäre erzeugt und für einen vorgegebenen Zeitraum T3 beibehalten. Durch das wiederholte Durchführen der Verfahrensschritte a) und b) sind die Oberflächen der Pflanzen 9 und des Nährbodens 7 aktiviert, so dass durch die erste Atmosphäre in der Pflanzkammer während des Verfahrensschritts d) eine große Menge von Wassermolekülen adsorbiert werden können, so dass eine Benetzungskatastrophe entsteht.

Dadurch wird eine große Menge von Wasser auf die Pflanzen und den Nährboden übertragen, wodurch die Pflanzen mit Wasser versorgt werden.

Das Wasser 13 kann für eine direkte Pflanzenbewässerung ungeeignetes oder bedingt geeignetes Wasser, wie beispielsweise stark salzhaltiges Wasser, sein. Dadurch, dass mittels des erfindungsgemäßen Verfahrens und der erfindungsgemäßen Pflanzkammer 1 das Wasser 13 über die Gasphase zu den Pflanzen 9 transportiert wird, wird verhindert, dass Salz in den Nährboden transportiert wird, so dass der Nährboden 7 nicht geschädigt wird.

In der Pflanzkammer 1 können ferner Absorberflächen 33 angeordnet sein, wie in Fig. 2 schematisch dargestellt ist. Die Absorberflächen 33 sind so ausgebildet, dass sich durch die erste Atmosphäre Wasser auf den Absorberflächen 33 niederschlägt und auf den Nährboden 7 tropfen kann. Dieses Wasser kann somit zu der Versorgung der Pflanzen 9 beitragen. Die Absorberflächen 33 können beispielsweise zu den Pflanzen gerichtet angeordnet sein, wodurch das auf den Absorberflächen niedergeschlagene Wasser in vorteilhafter Weise zu den Pflanzen gelangt. In dem in Fig. 2 dargestellten Ausführungsbeispiel sind die Absorberflächen neben den Pflanzen angeordnet. Selbstverständlich ist es auch möglich, dass die Absorberflächen 33 oberhalb der Pflanzen angeordnet sind und das auf den Absorberflächen 33 niedergeschlagene Wasser von oben auf den Nährboden 7 bzw. die Pflanzen 9 tropfen kann.

## Patentansprüche

1. Verfahren zur Bewässerung von in einem Nährboden (7) gepflanzten Pflanzen (9), wobei zumindest der Nährboden (7) in einer Pflanzkammer (1) angeordnet ist, mit folgenden Schritten:
a) Erzeugen einer ersten Atmosphäre mit einer ersten relativen Luftfeuchtigkeit (R1) in der Pflanzkammer (1) und Beibehalten der ersten Atmosphäre für einen Zeitraum (T1),
b) Reduzieren der relativen Luftfeuchtigkeit zu einer zweiten Atmosphäre mit einer zweiten relativen Luftfeuchtigkeit (R2) in der Pflanzkammer (1) und Aufrechterhalten der zweiten Atmosphäre für einen Zeitraum (T2),
c) Wiederholen der Schritte a) und b), **gekennzeichnet durch**
d) erneutes Erzeugen der ersten Atmosphäre in der Pflanzkammer (1) und Aufrechterhalten der ersten Atmosphäre für einen Zeitraum (T3) zur Erzeugung einer großflächigen Benetzung des Nährbodens (7), wobei die erste relative Luftfeuchtigkeit (R1) eine mit Wasser gesättigte oder quasi gesättigte erste Atmosphäre erzeugt.

2. Verfahren nach Anspruch 1, **dadurch gekennzeichnet, dass** die erste Atmosphäre durch das Einbringen von flüssigem Wasser (13) in die Pflanzkammer (1) erzeugt wird, wobei die Oberfläche des Wassers (13) mit der Atmosphäre in der Pflanzkammer (1) in Kontakt steht.

3. Verfahren nach Anspruch 2, **dadurch gekennzeichnet, dass** das Wasser (13) für eine direkte Pflanzenbewässerung ungeeignetes oder nur bedingt geeignetes Wasser ist und/oder dass das Wasser (13) mittels Kanäle (15) durch die Pflanzkammer (1) geleitet wird.

4. Verfahren nach einem der Ansprüche 1 bis 3, **dadurch gekennzeichnet, dass** T1 größer T2 und/oder T3 größer T1 ist.

5. Verfahren nach einem der Ansprüche 1 bis 4, **dadurch gekennzeichnet, dass** in Schritt b) die Reduzierung der relativen Luftfeuchtigkeit durch einen Luftaustausch mit der Umgebung außerhalb der Pflanzkammer (1) erfolgt.

6. Verfahren nach einem der Ansprüche 1 bis 5, **dadurch gekennzeichnet, dass** die zweite Luftfeuchtigkeit (R2) der zweiten Atmosphäre mindestens 10% geringer ist als die erste relative Luftfeuchtigkeit (R1) der ersten Atmosphäre.

7. Pflanzkammer (1) mit Bewässerungssystem (10) zur Durchführung des Verfahrens nach einem der Ansprüche 1 bis 6, bestehend aus Kammerwänden (3) und einer Kammerdecke (5), die zumindest einen Nährboden (7) für Pflanzen (9) umschließt, ein Behältersystem (11) mit Wasser (13), wobei in dem Behältersystem (11) aufgenommenes Wasser (13) mit der in der Pflanzkammer (1) befindlichen Atmosphäre in Kontakt steht und einem regelbaren Belüftungssystem (21) zur Veränderung der in der Pflanzkammer (1) befindlichen Atmosphäre durch Luftaustausch.

8. Pflanzkammer (1) nach Anspruch 7, **dadurch gekennzeichnet, dass** der Nährboden (7) den Boden der Pflanzkammer (1) bildet oder dass der Nährboden (7) in einem Trogsystem (31) aufgenommen ist, und die Pflanzkammer (1) einen separaten Boden (29) aufweist.

9. Pflanzkammer (1) nach Anspruch 7 oder 8, **dadurch gekennzeichnet, dass** die Kammerwände (3) und/oder die Kammerdecke (5) der Pflanzkammer (1) zumindest teilweise lichtdurchlässig sind.

10. Pflanzkammer (1) nach einem der Ansprüche 7 bis 9, **gekennzeichnet durch** ein Beleuchtungssystem zum Beleuchten der Pflanzen (9).

11. Pflanzkammer (1) nach einem der Ansprüche 7 bis 10, **dadurch gekennzeichnet, dass** das Behältersystem (11) durch die Pflanzkammer (1) geführte Kanäle (15) aufweist, wobei die Kanäle (15) jeweils einen Zu- und Abfluss (17, 19) aufweisen.

12. Pflanzkammer (1) nach Anspruch 11, **dadurch gekennzeichnet, dass** die Kanäle (15) rinnenförmig ausgebildet sind und eine größere Breite als Tiefe besitzen und/oder dass mehrere Kanäle (15) regalförmig übereinander angeordnet sind.

13. Pflanzkammer (1) nach einem der Ansprüche 7 bis 12, **dadurch gekennzeichnet, dass** das Belüftungssystem (21) in den Kammerwänden (3) angeordnete Belüftungsöffnungen (23) mit die Belüftungsöffnungen (23) verschließenden Belüftungsklappen (25) aufweist.

14. Pflanzkammer (1) nach Anspruch 13, **dadurch gekennzeichnet, dass** die Belüftungsklappen (25) eine zentrale Steuerung aufweisen.

15. Pflanzkammer (1) nach einem der Ansprüche 7 bis 14, **dadurch gekennzeichnet, dass** das Wasser (13) für die direkte Pflanzenbewässerung ungeeignetes oder bedingt geeignetes Wasser ist.

## Claims

1. Method for watering plants (9) planted in a fertile soil (7), wherein at least the fertile soil (7) is arranged in a planting chamber (1), the method comprising the following steps:
a) generating a first atmosphere with a first relative humidity (R1) in the planting chamber (1) and maintaining the first atmosphere for a period of time (T1),
b) reducing the relative humidity to a second atmosphere with a second relative humidity (R2) in the planting chamber (1) and maintaining the second atmosphere for a period of time (T2),
c) repeating steps a) and b),
**characterized by**
d) again generating the first atmosphere in the planting chamber (1) and maintaining the first atmosphere for a period of time (T3) to generate a large-surface wetting of the fertile soil (7), the first relative humidity (R1) generating a first atmosphere saturated or quasi saturated in water.

2. Method of claim 1, **characterized in that** the first atmosphere is generated by introducing liquid water (13) into the planting chamber (1), wherein the surface of the water (13) is in contact with the atmosphere in the planting chamber (1).

3. Method of claim 2, **characterized in that** that the water (13) is water that is not suited or only suited to a limited extent for direct watering of plants and/or that the water (13) is directed through the planting chamber (1) by means of channels (15).

4. Method of one of claims 1 to 3, **characterized in that** T1 is longer than T2 and/or T3 is longer than T1.

5. Method of one of claims 1 to 4, **characterized in that** in step b) the reduction of the relative humidity is effected by an exchange of air with the environment outside the planting chamber (1).

6. Method of one of claims 1 to 5, **characterized in that** the second humidity (R2) of the second atmosphere is lower by at least 10% than the first relative humidity (R1) of the first atmosphere.

7. Planting chamber (1) with a watering system (10) for performing the method of one of claims 1 to 6, the planting chamber being formed by chamber walls (3) and a chamber top (5) and enclosing at least a fertile soil (7) for plants (9), a container system (11) with water (13), wherein water (13) received in the container system (11) is in contact with the atmosphere in the planting chamber (1), and a controllable ventilation system (21) for changing the atmosphere in the planting chamber (1) by exchange of air.

8. Planting chamber (1) of claim 7, **characterized in that** the fertile soil (7) forms the bottom of the planting chamber (1) or that the fertile soil (7) is received in a trough system (31) and the planting chamber (1) has a separate bottom (29).

9. Planting chamber (1) of claim 7 or 8, **characterized in that** the chamber walls (3) and/or the chamber top (5) of the planting chamber (1) are at least partly translucent.

10. Planting chamber (1) of one of claims 7 to 9, **characterized by** an illumination system for illuminating the plants (9).

11. Planting chamber (1) of one of claims 7 to 10, **characterized in that** the container system (11) has channels (15) passing through the planting chamber (1), the channels (15) each having an inflow and an outflow (17, 19).

12. Planting chamber (1) of claim 11, **characterized in that** the channels (15) are of a gutter-like design and have a width that is larger than the depth and/or that a plurality of channels (15) are arranged one above the other in a rack-like manner.

13. Planting chamber (1) of one of claims 7 to 12, **characterized in that** the ventilation system (21) has ventilation openings (23) arranged in the chamber walls (3), the ventilation openings having ventilation flaps (25) closing the ventilation openings (23).

14. Planting chamber (1) of claim 13, **characterized in that** the ventilation flaps (25) comprise a central control.

15. Planting chamber (1) of one of claims 7 to 14, **characterized in that** the water (13) is water that is not suited or only suited to a limited extent for direct watering of plants.

## Revendications

1. Procédé pour l'irrigation des plantes (9) plantées dans un milieu de culture (7), au moins ledit milieu de culture (7) étant disposé dans une chambre de culture (1), avec les étapes suivantes :
a) produire une première atmosphère avec une humidité d'air relative (R1) dans la chambre de culture (1) et maintenir la première atmosphère pendant un laps de temps (T1),
b) réduire l'humidité d'air relative à une seconde atmosphère avec une seconde humidité d'air relative (R2) dans la chambre de culture (1) et maintenir la seconde atmosphère pendant un laps de temps (T2),
c) répéter les étapes a) et b),
**caractérisé par**
d) le fait de produire à nouveau la première atmosphère dans la chambre de culture (1) et maintenir la première atmosphère pendant un laps de temps (T3) pour produire un mouillage à grande surface du milieu de culture (7), la première humidité d'air relative (R1) produisant une première atmosphère saturée ou quasi-saturée d'eau.

2. Procédé selon la revendication 1, **caractérisé en ce que** la première atmosphère est produite par introduction d'eau liquide (13) dans la chambre de culture (1), la surface de l'eau (13) étant en contact avec l'atmosphère dans la chambre de culture (1).

3. Procédé selon la revendication 2, **caractérisé en ce que** l'eau (13) est de l'eau non appropriée, ou appropriée seulement de manière limitée, pour une irrigation directe des plantes et/ou que l'eau (13) est passée par la chambre de culture (1) par des canaux (15).

4. Procédé selon l'une des revendications 1 à 3, **caractérisé en ce que** T1 est supérieur à T2 et/ou que T3 est supérieur à T1.

5. Procédé selon l'une des revendications 1 à 4, **caractérisé en ce que** la réduction de l'humidité d'air relative à l'étape b) est effectuée par un échange d'air avec les alentours à l'extérieur de la chambre de culture (1).

6. Procédé selon l'une des revendications 1 à 5, **caractérisé en ce que** la seconde humidité d'air (R2) de la seconde atmosphère est inférieure d'au moins 10 % à la première humidité d'air relative (R1) de la première atmosphère.

7. Chambre de culture (1) avec un système d'irrigation (10) pour la mise en oeuvre du procédé selon l'une des revendications 1 à 6, comprenant des parois de chambre (3) et un plafond de chambre (5), laquelle enferme au moins un milieu de culture (7) pour des plantes (9), un système de récipients (11) avec de l'eau (13), de l'eau (13) reçue dans le système de récipients (11) étant en contact avec l'atmosphère se trouvant dans la chambre de culture (1), et un système de ventilation (21) réglable pour le changement de l'atmosphère se trouvant dans la chambre de culture (1), par un échange d'air.

8. Chambre de culture (1) selon la revendication 7, **caractérisé en ce que** le milieu de culture (7) forme le fond de la chambre de culture (1) ou **en ce que** le milieu de culture (7) est reçu dans un système d'auges (31) et que la chambre de culture (1) comprend un fond distinct (29).

9. Chambre de culture (1) selon la revendication 7 ou 8, **caractérisé en ce que** les parois de chambre (3) et/ou le plafond de chambre (5) de la chambre de culture (1) sont au moins partiellement translucides.

10. Chambre de culture (1) selon l'une des revendications 7 à 9, **caractérisé par** un système d'illumination pour l'illumination des plantes (9).

11. Chambre de culture (1) selon l'une des revendications 7 à 10, **caractérisé en ce que** le système de récipients (11) comprend des canaux (15) passant par la chambre de culture (1), les canaux (15) présentant chacun une entrée et une sortie (17, 19).

12. Chambre de culture (1) selon la revendication 11, **caractérisé en ce que** les canaux (15) présentent la forme d'une gouttière avec une largeur supérieure à leur hauteur et/ou **en ce que** plusieurs canaux (15) sont disposés les uns au-dessus des autres à la façon d'une étagère.

13. Chambre de culture (1) selon l'une des revendications 7 à 12, **caractérisé en ce que** le système de ventilation (21) comprend des ouvertures de ventilation (23) disposées dans les parois de chambre (3) et comportant des clapets de ventilation (25) obturant les ouvertures de ventilation (23).

14. Chambre de culture (1) selon la revendication 13, **caractérisé en ce que** les clapets de ventilation (25) présentent une commande centrale.

15. Chambre de culture (1) selon l'une des revendications 7 à 14, **caractérisé en ce que** l'eau (13) est de l'eau non appropriée, ou appropriée seulement de manière limitée, pour une irrigation directe des plantes.
